# EUROPEAN PATENT APPLICATION

(11) **EP 2 107 568 A1**
(43) Date of publication of application: **07.10.2009**
(21) Application number: 08021285.5
(22) Date of filing: 08.12.2008
(51) Int. Cl.: G11B 27/10, G11B 27/30, G11B 27/32, G11B 27/34, H04N 5/76

(54) **Methods and device for reproducing images**

(30) Priority: 31.03.2008 KR 20080029577
(71) Applicant: LG Electronics Inc., Seoul 150-010 (KR)
(72) Inventor: Song, In, Sun, Gyoungsangbuk-do, 730-727 (KR); Lee, Jae, Kyung, Gyoungsangbuk-do, 730-727 (KR)
(74) Representative: Katérle, Axel

(57) **Abstract**

A video reproduction control method comprising providing a list of at least one recorded program with a plurality of thumbnail images that correspond to different time points in the program, selecting a first thumbnail image, and reproducing the program from a first point in time that corresponds to the first thumbnail image.

## Description

### BACKGROUND

### 1. Field

One or more embodiments described herein relate to controlling the display of images including but not limited to moving picture content.

### 2. Background

A variety of personal video recorders (PVRs) have been produced. One type uses an internal storage medium to record broadcast television (TV) programs. Using a PVR of this type, a user can store programs through reservation recording (series recording and general recording) or immediate recording. Once stored, the programs may be retrieved from the hard disk for playback at a later time. However, controlling the playback of programs has proven to be difficult and inconvenient for the user.

### BRIEF DESCRIPTION OF THE DRAWINGS

Fig. 1 is a diagram showing one embodiment of an image display device.

Fig. 2 is a diagram showing a basic unit of an MPEG 2 broadcast stream.

Figs. 3A and 3B are diagrams showing an example of extracted thumbnail images according to one embodiment.

Fig. 4 is a flowchart showing steps included in one embodiment of a method for controlling the playback of recorded material.

Fig. 5A is a diagram showing an example of a screen that may be generated to display a list of recorded materials in accordance with one embodiment, Fig. 5B shows an example of a screen that may be generated when recorded material is selected from the list in Fig. 5A, and Fig. 5C shows an example of a reproduction screen that may be generated for playing back a section of the recorded material corresponding to a thumbnail image selected in Fig. 5B.

Fig. 6 is a diagram showing another example view of how sections of recorded material may be reproduced when corresponding thumbnail images are selected by a user for playback.

### DETAILED DESCRIPTION

In one type of personal video recorder, information identifying recorded programs stored on an internal hard disk may be displayed in a list. When a program is selected from the list, the program is reproduced at a recording start point of the selected program or at some arbitrary point. This is inconvenient because the user must fast-forward through the program in order to view a part that he desires to watch.

Also, when playback of a program is stopped prematurely and the user wishes to continue viewing the program at a later time, the recorder does not allow the viewer to view the program at the point where he left off. Rather, the recorder will begin playing the program from the beginning, which represents a further inconvenience to the user.

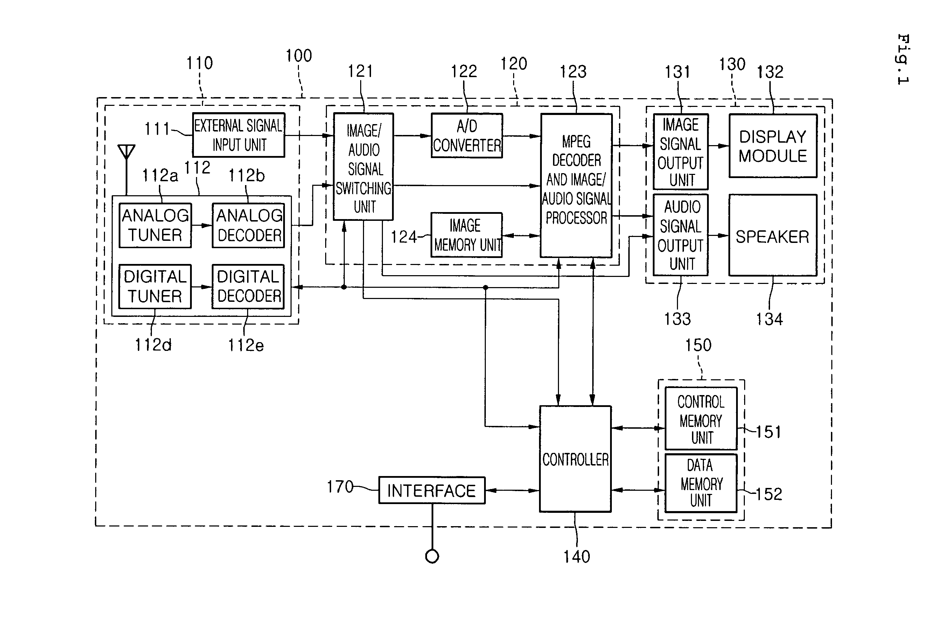

Fig. 1 shows one embodiment of an image display device that includes a receiver 110, a processor 120, an output unit 130, a controller 140, a storage unit 150, and an interface 170. The receiver has an external signal input unit 111 and a tuner unit 112. The processor 120 has an image/audio signal switching unit 121, an analog-to-digital (A/D) converter 122, a moving picture experts group (MPEG) decoder and image/audio signal processor 123, and an image memory unit 124. The output unit 130 includes an image signal output unit 131, a display module 132, an audio signal output unit 133, and a speaker 134.

The external signal input unit 111 receives signals from an external source and provides them to image/audio signal switching unit 121. The external source may be a broadcast source, a cable source, a satellite source, or an Internet source for providing, for example, television programming or other content to be recorded. In one application, the external source may be Internet television (IPTV) programming. In other applications, the external source may correspond to a digital versatile disk (DVD), a set-top box, a camcorder, or another source capable of providing audio and/or video signals to be recorded.

The tuner unit 112 selects at least one channel in response to a control signal from controller 140, decodes or separates image/audio/data signals received through the selected channel and provides them to image/audio signal switching unit 121. The data signal may include, for example, electronic program guide (EPG) information including information such as start times and end times of programs broadcast on the selected channel. In accordance with one or more embodiments described herein, tuner unit 112 can additionally or alternatively be coupled to a cable provider which provides analog and/or digital image/audio/data signals.

The data signal can be deciphered as data information by decoding. Control information for a program, which may represent at least a portion of the data information, may be directly or indirectly transferred to the controller. Also, the controller may search for a different channel that carries the same content as content broadcast through a current channel using the control information. An operation of searching for a different channel using the data information may be performed as a data using operation.

The tuner unit 112 may include an analog tuner 112a for receiving analog signals, a digital tuner 112d for receiving digital signals, an analog decoder 112b (e.g., a National Television Standards Committee (NTSC) decoder or a Phase Alternating Line (PAL) decoder) for decoding analog signals, and a digital decoder 112e (e.g., a vestigial sideband (VSB) decoder) for decoding digital signals. Image/audio signals output through the VSB decoder correspond to a transport stream (TS).

The image/audio signal switching unit 121 selects at least one channel from channels provided by external signal input unit 111 and tuner unit 112 and separates at least image/audio signals of the selected channel if necessary. The separation function may be performed, for example, by a demultiplexer in the image/audio signal switching unit that can separate signals into image/audio/data signals. After separation, the signal switching unit provides the signals to MPEG decoder and image/audio signal processor 123.

In the case where a signal selected by the image/audio signal switching unit is an analog signal, the analog signal is separated into an image signal and an audio signal. Then, the analog image signal is converted into a digital image signal by A/D converter 122 and provided to the MPEG decoder and image/audio signal processor. The analog audio signal can also be provided to the audio signal output unit 133.

In the case where a signal selected by the image/voice signal switching unit is a digital signal, both the image signal and the audio signal of the digital signal can be provided to the MPEG decoder and image/audio signal processor.

The MPEG decoder and image/audio signal processor 123 recovers and processes image/audio streams of signals output from image/audio signal switching unit 121 in the form of image/audio data, provides the processed image signal to the image signal output unit 131, and provides the processed audio signal to the audio signal output unit 133. The MPEG decoder and image/audio signal processor can mix on-screen-display (OSD) data provided by controller 140 with recovered and processed image signal.

The image memory unit 124 serves as a memory area for storing information for a decoding operation, a signal processing operation performed by the MPEG decoder, and operations performed by image/audio signal processor 123. According to one particular application, image memory unit 124 and control memory unit 151 are used in a searching operation for searching for another channel through which same contents are broadcasted. For example, they may be used for comparing sameness of (or determining the similarity between) two or more channels in terms of their content when a symbol use operation and an image comparison operation are performed.

The image signal output unit 131 (an LVDS receiver can be included in the image signal output unit 131) processes an image signal from the MPEG decoder and image/audio signal processor 123, so that video information can be output through display module 132. The audio signal output unit 133 processes an audio signal (which, for example, may include voice information) from the MPEG decoder and image/audio signal processor, so that audio information can be output through the speaker 134.

The interface 170 can be, for example, a local key button on a remote controller or an image device. The interface receives various commands and information from a user and converts them into control signals. The control signals are then delivered to the controller. One command received through interface allows a signal, corresponding to a relevant program to be recorded according to a user's request, to be received with respect to an image signal from an external source.

The interface may receive other types of signals. For example, the interface may receive a command to reproduce an already stored program according to a user's request, and/or the interface may receive a signal for selecting at least one thumbnail image corresponding to a program in a displayed list of programs or from a reproduction screen. The selected thumbnail image may then be selected and a corresponding portion of the program may be selectively output for viewing by the user.

The controller 140 controls tuner unit 112, image/audio signal switching unit 121, and MPEG decoder and image/audio signal processor 123, and may also be designed and connected to control other elements of image device 100 if necessary. Also, according to one embodiment, the controller controls thumbnail images to be extracted for a given stored program and the number (N) of those thumbnails to be displayed when that program is selected from a list of recorded programs or other materials stored in the display device.

That is, the controller may control the display of a list of recorded materials to be displayed according to a user request and may control recording information and N thumbnail images to be displayed with respect to recorded material selected from the list. The images may be displayed directly in the list when the recorded material is selected from the list, and/or the images may be displayed in a reproduction screen.

When one of the N thumbnail images is selected, the controller causes the recorded material (e.g., a recorded TV program) to be played on the reproduction screen from a point in time that corresponds to the selected image. Prior to play back, the selected image may initially be displayed (e.g., in enlarged form) on the screen and then the program may be played back starting from the aforementioned time point. The program may continue to play until the end of the program, or alternatively the program may play for a predetermined time period (e.g., a predetermined number of seconds or minutes) set in the display device.

The controller may also simultaneously cause a predetermined number (M) of thumbnail images to be displayed at a predetermined location on the reproduction screen. The M thumbnail images may be equal to or less than the N thumbnail images. A reproduction time line (also known as a progress bar) may be displayed relative to the thumbnail images on the screen.

The image/audio signals output from the image/audio signal processor 123 may be stored in memory unit 150. This memory unit may, for example, correspond to a hard disk and the controller may function as a hard-disk controller.

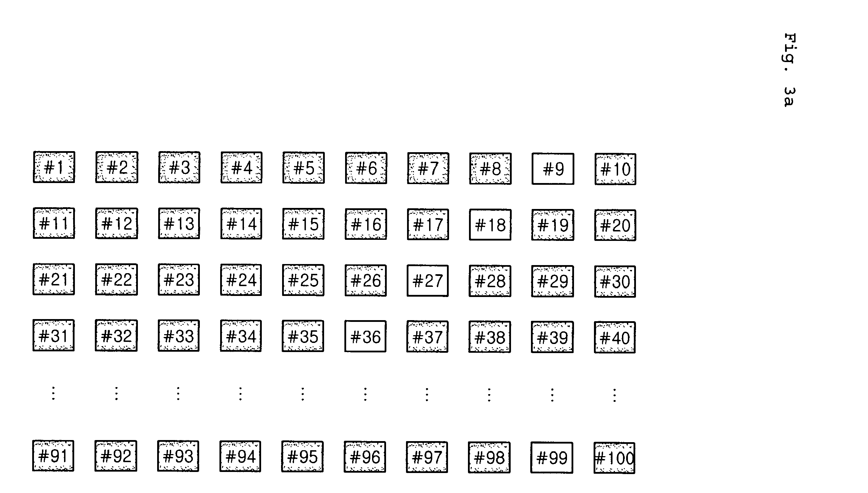

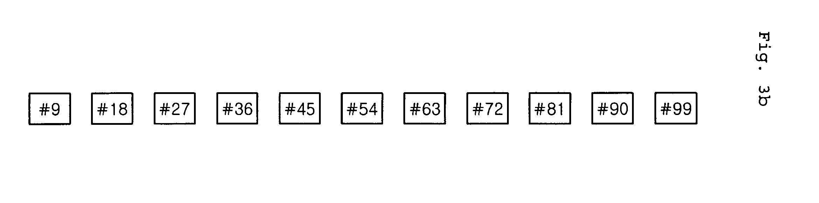

Structurally, the memory unit 150 may include control memory unit 151 and data memory unit 152. The control memory unit may be used to store information input by a user and/or data generated and managed by controller 140. For example, according to one embodiment, the control memory unit may stores information regarding a thumbnail image extraction point set by the user. This point may be set based on an input signal from a user. The extraction point may also be set by the user based on activation of a predetermined cursor or icon displayed, for example, in the list of recorded programs or another screen. The data memory unit 152 may store the recorded material (e.g., programs) and the thumbnail images shown, for example, in Figs. 3a and 3b to be discussed in greater detail below. In other embodiments, the recorded material and/or thumbnail images may be stored in an external storage device coupled to the display device.

Operation of the one embodiment of the image display device will now be described. Initially, when a power-on command is input through interface 170, controller 140 generates a control signal so that television signals of a channel selected by a user (or signals from another external source) are input through tuner unit 112. Then, when a recording command is received through interface 170, the controller controls a relevant television program (or other audio/visual content) to be stored in memory unit 150. Simultaneously, the controller controls the extraction and storage of thumbnail images corresponding to predetermined points set in advance. The thumbnail images may also be stored in memory unit 150.

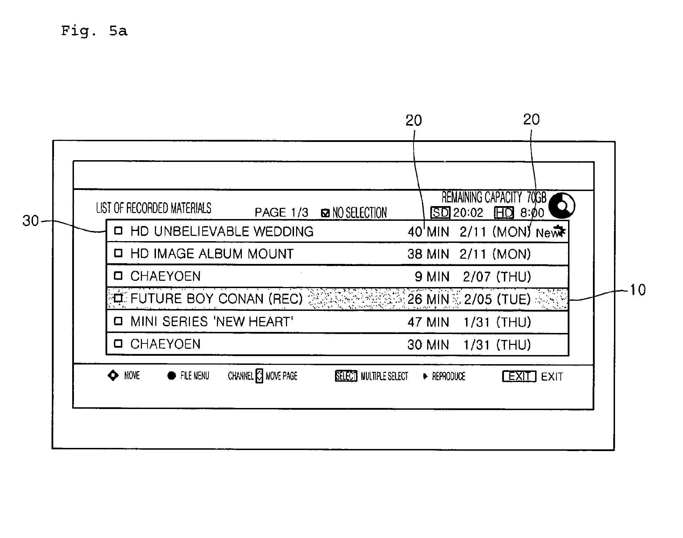

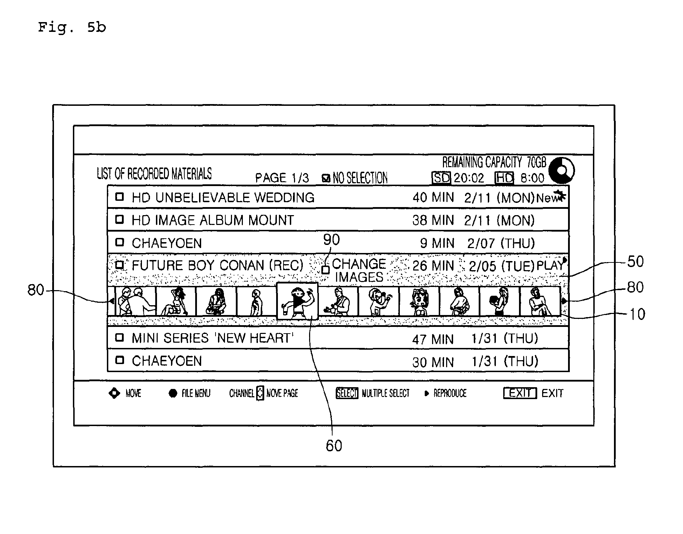

When a reproduction (e.g., playback) command for a recorded program stored in the memory unit is received from a user (e.g., from a remote control device or as a result of pressing a button on the display device), the controller causes a list of the recorded materials to be displayed. The list may also include various types of recording information to be displayed for each program in the list. For example, the list may include titles of recorded television programs along with the length, date, and day on which those programs were recorded. (See, for example, Figs. 5a and 5b).

Also, the controller causes a series of thumbnail images to be displayed with one or more of the items (e.g., titles of recorded programs) in the list. The thumbnail images may be displayed for each item in the list before a selection is made or the thumbnail images may only be displayed for a selected item on the list once that item has been selected.

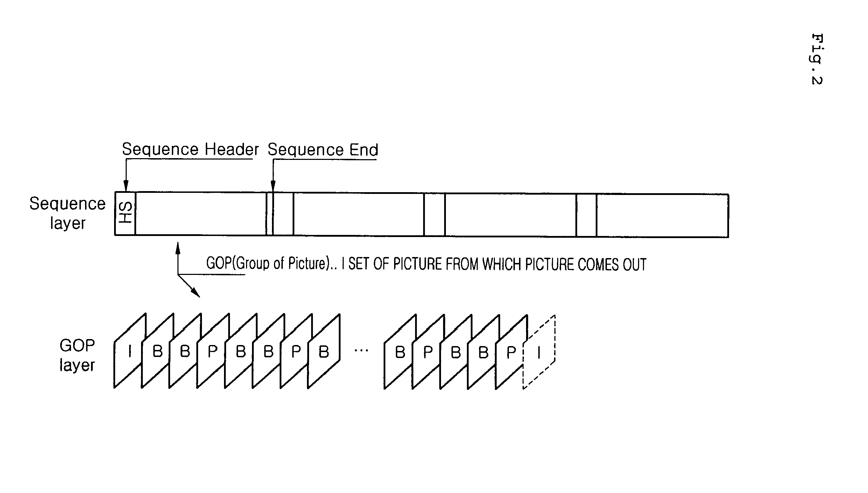

An operation for extracting thumbnail images stored during recording will now be described with reference to Fig. 2. In explaining this extraction process, it is understood that a basic unit of a broadcast stream is referred to as a frame. An independent reproduction can be performed on a group-of-pictures (GOP) basis, where GOP corresponds to a minimum unit of a section of moving picture data of a recorded program in which I, P, and B pictures or frames are merged.

An I picture or frame (intra-picture) may be understood to correspond to a picture or frame encoded using only information of itself without prediction of previous and next pictures or frames. A P picture or frame (intra-frame predicted picture) is understood to correspond to a picture or frame generated from an I picture or a previous P picture through prediction. And, a B picture or frame (bi-directional predicted/bi-directional interpolated picture) is understood to correspond to a picture or frame generated through prediction in dual directions of each of an I picture and a P picture.

According to one embodiment, each thumbnail image may correspond to a key frame of a different GOP. The key frame is a frame used to help compress an image file and may be designated by selecting one type of frame in GOPs of the recorded program at a constant interval, or by selecting a predetermined section formed of a frame arrangement (I/B/P frames) that is used as a basis for predicting and recovering an image.

According to one embodiment, the thumbnail images may correspond to I frames of continuous or discontinuous GOPs in a recorded program. The I frames may be extracted at a constant interval and may be decoded before the corresponding thumbnail images are displayed. Further, the I frames may be reproduced independently, for example, as images in an MPEG series H.261 and H.264, with each I frame corresponding to a different section of the recorded program. Also, the I frames may be independently extracted regardless of a compression method used for the recorded program. Alternatively, a frame arrangement scheme may be used as a basis for identifying key frames to be used in generating the thumbnail images. In other embodiments, the thumbnail image may correspond to a B or P frame.

Figs. 3a and 3b show one way in which thumbnail images may be extracted for controlling display of respective sections of a recorded program. In Fig. 3A, plurality of thumbnail images (#1 to # 100) are extracted during recording of a program and stored in memory unit 150 or in a temporary buffer (not shown). This extraction process may be automatically performed in response to a command received from a user to perform a recording operation for a specific program.

The thumbnail images may be extracted, for example, by dividing the reproduction time of a recorded program into equal intervals or time points. An I frame (or alternatively a B or P frame) in a GOP closest to each divided interval or time point is then extracted and stored as corresponding one of the thumbnail images. Next, a representative sampling of the extracted thumbnail images is selected. These images will then be the ones that are displayed in a list of recorded programs to be discussed in greater detail below. Other thumbnail image extraction methods may be possible depending on user or market needs or demands.

For example, in the case where the number of thumbnail images generated during a recording operation is 100 (Fig. 3a) and the number of thumbnails to be displayed in a list of recorded programs is 11, a constant interval = 9 will cause every ninth thumbnail image to be selected from the 100 images. The selected (N) thumbnail images (e.g., #9, #18, ..., #99 in Fig. 3b) are the thumbnail images to be displayed in the list of recorded programs. (A parameter designating the constant interval may be preprogrammed into software of the controller or the user may be given the option of setting this parameter, for example, using a control menu or through activation of a screen cursor or icon.)

The constant interval used to generate the N thumbnail images for display in the list may be changed by a controller of the display device depending, for example, on the total time length of the recorded program. According to one embodiment, the constant interval is increased for longer recorded programs and decreased for shorter programs. For example, a constant interval of 10 may be used for a program that is 40 minutes in length. This will result in producing a thumbnail image for display on the list every 4 minutes. On the other hand, a constant interval of 4 may be used for a recorded program that is 2 minutes. This will result in producing a thumbnail image for display on the list every 30 seconds. One or more threshold values may be used to determine the constant intervals to be used in generating the thumbnail images.

In an alternative embodiment, thumbnail images #1 to #100 may correspond to every I frame that continuously and sequentially appears in the recorded program. (A control parameter may be stored in the display device to effect this type of thumbnail image extraction.) The N thumbnail images to be displayed in the recorded program list may be derived in a similar manner as described above, e.g., using a constant-interval selection process.

If the N thumbnail images cannot all be displayed within the list, or in a given area of a reproduction screen, then a subset M of these images may be displayed in the list or reproduction screen. If N > M, a mark such as an arrow 80 (Fig. 5b) may be displayed to inform a user that more thumbnail images exist that can be displayed on at least one lateral side of a thumbnail list. Alternatively, the additional thumbnail images may be displayed in response to a user pressing left or right arrow keys to cause corresponding signals to be received through interface 170. When the mark or keys are pressed, the thumbnails may be sequentially displayed or scrolled in corresponding directions.

For example, consider the case where the M thumbnail images correspond to a column of thumbnail images (e.g., images 6, 16, 26, etc.) shown in Figure 3a. Pressing the right arrow key may cause images 7, 17, 27, etc., to be displayed. Conversely, pressing the right arrow key may cause images 5, 15, 25, etc., to be displayed. Other sequences of images may be displayed in other embodiments. These other sequences may, for example, correspond to numerically sequential images being displayed when either the left or right keys are pressed.

According to one embodiment, the same thumbnail images displayed in the list may be displayed on the reproduction screen. All of the thumbnail images in the list, however, may not be displayed on the reproduction screen at one time. Rather, fewer than N (e.g., M) thumbnail images may be displayed on the reproduction screen and the remaining N images may be viewed by activating arrow keys or cursors on the screen which produce a scrolling effect.

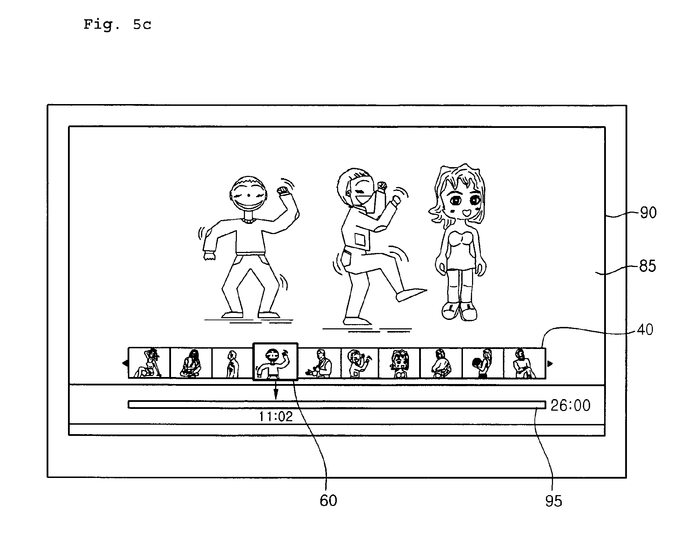

According to another embodiment, the thumbnail images (M) on the reproduction screen may be substantially different from the thumbnail images (N) in the list. This may occur as follows. When a thumbnail image is selected from the list, the reproduction screen is automatically displayed showing the selected thumbnail image, both in enlarged form in a main viewing area 85 (Fig. 5c) of the screen and in thumbnail form along a bottom portion of the screen as part of a sequence 40 of other thumbnail images. Unlike in previous embodiments, the other thumbnail images in sequence 40 may be different from any of those displayed in the list.

For example, the other thumbnail images shown in sequence 40 may be derived using a constant sampling interval different from the constant interval used to obtain the thumbnail images in the list. This constant interval may be larger than the constant interval used to generate the thumbnail images in the list. As a result, the thumbnail images in sequence 40 in the reproduction screen will be closer in time to image selected in the list.

To further illustrate this point, consider the case where a constant instant interval equal to 10 is used to generate the N thumbnail images in the list for a 40 minute recorded program. As a result, the N thumbnail images are generated every 4 minutes. Now, if a user selects a thumbnail image from the list that corresponds to the 16-minute time point, an enlarged version of that image is displayed on a main area of the reproduction screen and a sequence of thumbnail images is displayed at the bottom of the reproduction screen.

The sequence of thumbnails at the bottom of this screen includes the selected thumbnail image. However, the remaining thumbnail images (e.g., ones to the left and right of the selected image in sequence 40) may be derived using a constant interval of 100. As a result, the thumbnails in sequence 40 are generated based on 24 second intervals. Thus, a user is able to determine with greater specificity the content of the recorded image before and after the thumbnail image selected in the list.

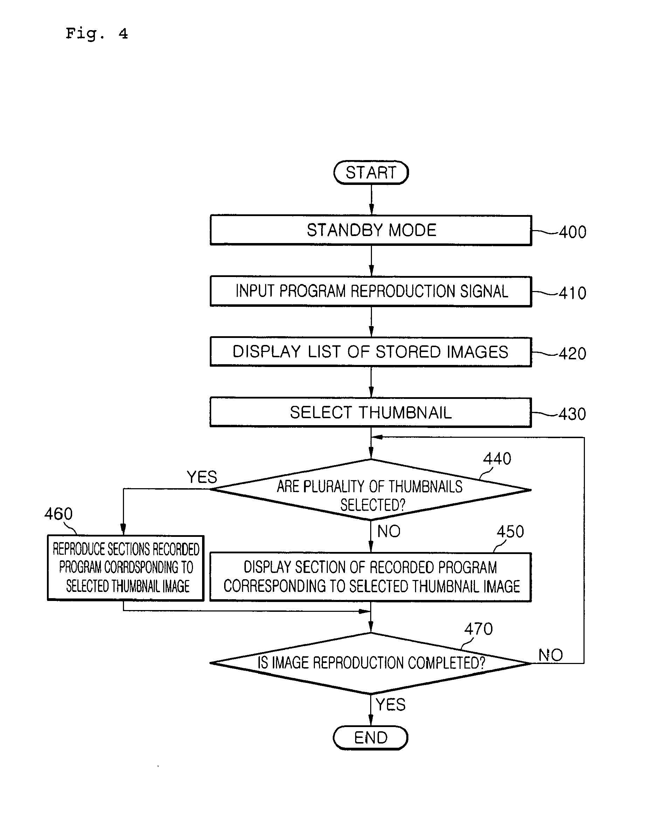

An operation for one embodiment for reproducing recorded material will now be described with reference to Figs. 4 to 6. First, a signal is received from a user (operation 410) to cause a list of recorded programs to be displayed. The user signal may be initiated, for example, during a standby mode of the device or while a specific image is being displayed (operation 400). In response to this signal, controller 140 displays (operation 420) a list of recorded programs stored in memory unit 150.

As shown in Fig. 5a, the list 10 may be displayed with information 20 relating to each recorded program 30 (e.g., recorded time length, date, day of the week, etc.) in the list. As previously indicated, the program may be acquired from a broadcast source, a satellite source, a cable source, the Internet (e.g., IPTV), or other source, e.g., a camcorder, computer, or other source capable of providing audiovisual information.

When controller 140 receives a user signal selecting one of the recorded programs from the list, the program may be highlighted and, preferably, M thumbnail images 40 are displayed in the list. For example, when "Future Boy Conan" is selected from the list, 11 thumbnail images may be displayed in an expanded section 50 of the screen where the list is located as illustrated in the screen of Fig. 5b.

The number of thumbnail images to be displayed may be previously set to M, e.g., 11. In this example, the reproduction time of a recorded program may be equally divided into M (11) sections or intervals so that thumbnail images closest to time points corresponding to the equally divided intervals are selected and set as the thumbnail images to be displayed in the expanded area of the list when the program is selected.

Next, a user selects at least one of the thumbnail images (operation 430) displayed in the list. When a selection is made (e.g., highlighted image 60), it is determined whether one or more of the displayed thumbnail images are selected (operation 440). When a plurality of thumbnail images are selected, controller 140 reproduces (plays back) plays back the recorded program from a point in time that corresponds to the first selected thumbnail image and ending based on a second one of the selected thumbnail images. This section can be repeatedly reproduced, if desired, depending on one or more control settings (operation 460).

When only one thumbnail image is selected, the controller plays back the recorded program from a point in time that corresponds to the selected thumbnail (operation 450), e.g., starting from the I frame in the first GOP of the recorded program corresponding to the selected thumbnail image. The program may continue to play until the end of the program or for a predetermined time.

The recorded program is played back in a main area 85 of a reproduction screen 90 such as shown in Fig. 5c. This screen may be displayed automatically based on selection of one or more thumbnail images in the list. Alternatively, the reproduction screen may be displayed in when, for example, a title corresponding to a recorded program is selected from the list of recorded programs in Fig. 5a. When the title is selected, the program may be played back from a predetermined point in time, e.g., from a beginning point of the recorded program.

The reproduction screen may include a sequence of thumbnail images (M) 40. As previously discussed, this sequence may include the same or a subset of the N thumbnail images shown in the list of recorded programs, or may correspond to different thumbnail images generated using a different constant interval then was used to generate the thumbnail images in the list. The thumbnail image 60 corresponding to a currently playing section of the program may be highlighted, and a reproduction time line (e.g., progress bar) 95 may also be shown on this screen relative to the thumbnail images.

Thus, a user may control playback of only a section of a recorded program from a specific point in time by selecting a thumbnail image displayed in the list shown in Fig. 5b. This is advantageous because it allows the user to avoid having to playback the material from the beginning recording time (e.g., time 0 seconds) and then fast-forwarding until he or she finds the section of the recorded program desired to be watched.

Moreover, when the user selects another thumbnail image (e.g., one different from a thumbnail image selected in Fig. 5b) shown in the reproduction screen of Fig. 5c, a section of the recorded program may be played back in the reproduction screen without having to return to the list in Fig. 5b. A moving cursor on the reproduction time line may be displayed relative to the section being played back, with a corresponding indication of play back time also being provided. Highlighting of the thumbnail image currently being played back may move with the cursor on the time line.

According to another embodiment, a video reproduction control method includes providing a list of at least one recorded program with a plurality of thumbnail images that correspond to different sections of the program; selecting the program or one of the thumbnail images in the list; generating a reproduction screen; and if the program is selected, then reproducing the program from a point in time that corresponds a predetermined image from the program, or if one of the thumbnail images is selected, then reproducing the program from a point in time that corresponds to the selected thumbnail image. The reproduction screen includes a plurality of thumbnail images.

Also, in this embodiment, reproduction of the program may be changed to a point in time that corresponds to a selected one of the thumbnail images in the reproduction screen or based movement of a cursor in a progress bar provided in the reproduction screen. Thus, for example, when a user selects one of the thumbnail images in the reproduction screen, the recorded program may skip to the portion of the program that corresponds to that image. The A cursor in the progress bar may be adjusted accordingly. Also, a user may reposition the cursor in the progress bar to play another section of the program.

In accordance with another embodiment, a list of thumbnail images may be displayed for each recorded program indicated in the list of Fig. 5b. Also, when each list is selected, a cursor or icon 90 may be generated to allow the user to change the thumbnail images being shown. For example, when the cursor or icon is activated, a different interval (e.g., 8) may be used to select a different sequence of N images from the extracted images shown, for example, in Fig. 5a. The different sequence of N thumbnail images may then automatically be displayed in the list. Pressing the cursor again may cause another interval to be used (e.g., 7). The intervals may be changed sequentially with each activation of the cursor or a different order of intervals may be used.

Alternatively, when cursor 90 is activated, the same constant interval may be used to generate a different sequence of thumbnail images for display, but the starting point for applying that interval may be changed. For example, for a constant interval of 9, pressing the cursor once may cause the starting frame to correspond to frame #8 instead of frame #9 as previously indicated. Thus, the thumbnail images displayed in the list may correspond to images #8, # 17, #26, etc. Pressing the cursor again may cause the interval of 9 to be applied to starting frame #7 and so on.

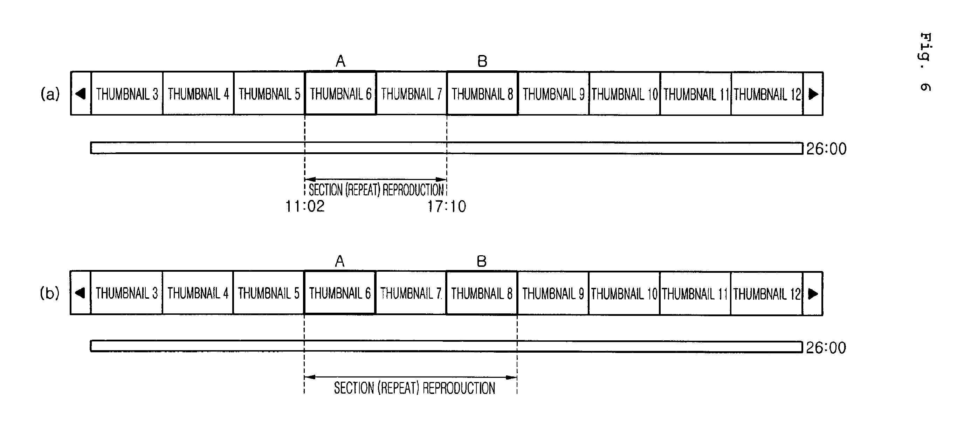

Fig. 6 shows another embodiment where a user is allows to select more than one thumbnail image in the list shown in Figs. 5b. When more than one thumbnail image is selected, the sections of the recorded program and all sections in between may be played back sequentially and continuously on the reproduction screen of Fig. 5c. For example, when thumbnail images 6 and 8 are selected as shown in Fig. 6a, sections corresponding to thumbnail images 6 and 7 are played and playback stops at the beginning (e.g., the leading I frame) of the section corresponding to thumbnail image 8.

Alternatively, when thumbnail images 6 and 8 are selected as shown in Fig. 6b, sections corresponding to thumbnail images 6, 7, and 8 are played and playback stops at the beginning (e.g., the leading I frame) of the section corresponding to thumbnail image 9. According to another alternative embodiment, only sections corresponding to the selected thumbnail images are played back, e.g., if thumbnail images 6 and 8 are selected, then the sections corresponding to thumbnail images 6 and 8 are played back and the section corresponding to image 7 is skipped.

Also, in the case where a plurality of thumbnail images are selected by a user in Fig. 4, the sections of the recorded program corresponding to the selected thumbnails may be (repeatedly) reproduced as further illustrated in Figs. 6a and 6b, or a predetermined reproduction time may be selected from the thumbnails and a corresponding section can be (repeatedly) reproduced.

Thus, in one embodiment, N thumbnails are displayed for recorded material selected from a list of recorded materials by the user. When one of the N thumbnails is selected, a corresponding image is reproduced. Additionally, or alternatively, M thumbnails may be displayed on the reproduction screen of the selected thumbnail and movably varied according to the screen being displayed, and corresponding thumbnails can be highlighted and displayed.

In one or more of the foregoing embodiments, a point identified by the user can be selected while an image is being recorded or recorded material is being reproduced, and an image at the corresponding point may be set as a thumbnail. In the case where a list of thumbnails is displayed on a list of recorded materials or a reproduction screen of a recorded material, the thumbnail selected by the user can be included and displayed.

One or more of the foregoing embodiments therefore provide a method and a device for reproducing an image that allow a user to more conveniently view a recorded program from a desired point when the recorded program is being reproduced. One or more embodiments are also provided to allow a user to easily check contents of a program on a list or through a thumbnail image displayed on a screen of a display device. The reproduction control device may be incorporated within the display device or coupled to it, for example, through an appropriate interface.

In accordance with one embodiment, a method for reproducing an image using recording information in an image display device comprising a storage unit comprises storing thumbnails from a broadcasting stream of a broadcast program being recorded; displaying a list of recorded materials according to a user's request; when one recorded material is selected from the list of the recorded materials, displaying information of the selected recorded material and N thumbnails together; and selecting at least one of the N thumbnails to reproduce a corresponding image.

In accordance with another embodiment, a method for reproducing an image using recording information in an image display device comprising a storage unit comprises displaying a list of recorded materials according to a user's request; selecting one recorded material from the list of the recorded materials; and reproducing M thumbnails and an image corresponding to the selected recorded material.

In accordance with another embodiment, a method for reproducing an image using recording information in an image display device comprising a storage unit comprises storing thumbnails from a broadcasting stream of a broadcast program being recorded; displaying a list of recorded materials according to a user's request; when one recorded material is selected from the list of the recorded materials, displaying information of the selected recorded material and N thumbnails of the stored thumbnails together; and selecting at least one of the N thumbnails to reproduce a corresponding image, and displaying M thumbnails on a predetermined area of a reproduction screen.

In accordance with another embodiment, an image display device includes a memory unit storing recorded materials of broadcast programs received from an outside, and storing corresponding thumbnails together when recording the broadcast program; a display module displaying a list of the stored recorded materials and the corresponding thumbnails according to a user's request, and reproducing an image corresponding to the recorded material or the thumbnail selected by the user; and a controller controlling the recorded materials and the thumbnails of the broadcast programs received from the outside to be stored, the recorded material and the thumbnail to be displayed according to the user's request, and the image corresponding to the recorded material or the thumbnail selected by the user to be reproduced.

As described above, the embodiments described herein allow a user to easily identify, select, and view specific portions of recorded and stored material without having to view other portions. Also, the term "recorded material" may be used synonymously with "recorded program," and also recorded program may correspond not only to television programs but also other forms of audiovisual information included video signals derived from a network such as the Internet, wireless signals in a communication system, moving picture camera signals, DVD signals as well as others.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

In the foregoing embodiments, use of the word unit may refer to a hardware circuit or software implemented to perform all or a portion of the functions of the unit.

Although embodiments of the present invention have been described with reference to a number of illustrative embodiments thereof, it should be understood that numerous other modifications and embodiments can be devised by those skilled in the art that will fall within the spirit and scope of the principles of this invention. More particularly, reasonable variations and modifications are possible in the component parts and/or arrangements of the subject combination arrangement within the scope of the foregoing disclosure, the drawings and the appended claims without departing from the spirit of the invention. In addition to variations and modifications in the component parts and/or arrangements, alternative uses will also be apparent to those skilled in the art.

## Claims

1. A video reproduction control method, comprising:
providing a list of at least one recorded program with a plurality of thumbnail images that correspond to different time points in the program;
selecting a first thumbnail image; and
reproducing the program from a first point in time that corresponds to the first thumbnail image.

2. The method of claim 1, further comprising:
providing the plurality of thumbnail images in response to selection of the program in the list.

3. The method of claim 1, wherein the plurality of thumbnail images and the list are provided simultaneously.

4. The method of claim 1, further comprising:
selecting a second thumbnail image, wherein reproduction of the program ends at a second point in time based on the second thumbnail image.

5. The method of claim 4, wherein the second point in time corresponds to the second thumbnail image.

6. The method of claim 1, wherein the program is played back from the first point in time for a predetermined time period.

7. The method of claim 1, further comprising:
changing an appearance of the selected thumbnail image within the list to indicate said selection.

8. The method of claim 1, further comprising:
extracting a first set of thumbnail images from the program during recording;
generating a second set of thumbnail images from the first set of thumbnail images, the second set of thumbnail images generated based on a first constant interval, wherein the second set of thumbnail images are the thumbnail images displayed in the list.

9. The method of claim 8, wherein the first constant interval is based on a total time length of the program.

10. The method of claim 8, wherein the program is reproduced on a reproduction screen that simultaneously displays a plurality of thumbnail images.

11. The method of claim 10, wherein thumbnail images in the reproduction screen are generated using a second constant interval different from the first constant interval.

12. The method of claim 10, wherein the reproduction screen displays a progress bar with the program and the thumbnail images.

13. The method of claim 12, wherein additional thumbnail images are shown on the screen when a mark on the reproduction screen is activated.

14. The method of claim 8, wherein the first constant interval is set by a user.

15. A controller for a display device comprising:
at least one circuit to provide a list of at least one recorded program with a plurality of thumbnail images that correspond to different time points in the program, to select a first thumbnail image, and to reproducing the program from a first point in time that corresponds to the first thumbnail image.

16. A video reproduction control method, comprising:
providing a list of at least one recorded program with a plurality of thumbnail images that correspond to different sections of the program;
selecting the program or one of the thumbnail images in the list;
generating a reproduction screen; and
if the program is selected, then reproducing the program from a point in time that corresponds to a predetermined image from the program, or if one of the thumbnail images is selected, then reproducing the program from a point in time that corresponds to the selected thumbnail image.

17. The method of claim 16, wherein the reproduction screen includes a plurality of thumbnail images.

18. The method of claim 17, further comprising:
changing reproduction of the program to a point in time that corresponds to a selected one of the thumbnail images in the reproduction screen or based movement of a cursor in a progress bar provided in the reproduction screen.

19. An image display device comprising:
a storage device to store a program received from at least one external source and for storing thumbnail images acquired for the stored program;
a display module to display a list identifying the stored program and corresponding ones of the thumbnail images stored in the storage device; and
a controller to control display of the thumbnail images corresponding to the stored program, and to control reproduction of the selected program from a point in time corresponding to at least one selected thumbnail image.

20. The device of claim 19, wherein the controller stops reproduction of the program at a time point based on another selected thumbnail image.
